# EUROPEAN PATENT APPLICATION

(11) **EP 3 572 689 A1**
(43) Date of publication of application: **27.11.2019**
(21) Application number: 17892480.9
(22) Date of filing: 30.11.2017
(51) Int. Cl.: F16F 15/04, F02B 77/00

(54) **VIBRATION DAMPING AND NOISE REDUCTION DEVICE AND MARINE DIESEL ENGINE PROPULSION POWER MODULE SYSTEM**

(30) Priority: 19.01.2017 CN 201710043972
(71) Applicant: Shanghai Marine Diesel Engine Research Institute, Shanghai 201108 (CN)
(72) Inventor: SUN, Wei, Shanghai 201108 (CN); TONG, Zongpeng, Shanghai 201108 (CN); ZHU, Kui, Shanghai 201108 (CN); LIU, Xiaoliang, Shanghai 201108 (CN); ZHOU, Xiaojie, Shanghai 201108 (CN); HOU, Tianzhu, Shanghai 201108 (CN); ZHANG, Zijian, Shanghai 201108 (CN); ZHAO, Tongbin, Shanghai 201108 (CN); ZENG, Xianyou, Shanghai 201108 (CN)
(74) Representative: Schrell, Andreas
(86) International application number: PCT/CN2017/113949
(87) International publication number: WO 2018/133558

(57) **Abstract**

The present invention relates to a vibration damping and noise reduction device and a marine diesel engine propulsion power module system, the power module comprising: a diesel engine and a gear box connected to the diesel engine via a transmission connector; wherein the vibration damping and noise reduction device can meet the requirement a four-level classification system of vibration damping and noise reduction of the marine diesel engine propulsion power module, and wherein the vibration damping and noise reduction device comprises: a first vibration damping and noise reduction structure located on a diesel engine side and a second vibration damping and noise reduction structure located on a gear box side. The vibration damping and noise reduction device for the marine diesel engine propulsion power module according to the present invention can provide the marine power design with a standardized and serialized diesel engine propulsion power module, so as to achieve a rapid and precise design goal of the marine diesel engine propulsion power module.

## Description

### BACKGROUND

The present invention relates to the field of vibration damping and noise reduction of a marine propulsion device, and specifically to a vibration damping and noise reduction device and a marine diesel engine propulsion power module system.

It is known that the marine diesel engine is a primary vibration and noise source of the propulsion power module. The diesel engine is a reciprocating machinery, and the vibration and noise source generated has strong order characteristics. Meanwhile, a gear box is also one of the vibration sources of the diesel engine propulsion power module. In particular, when the urgent problem of weight and space is solved upon upsizing the diesel engine propulsion power module, the rigid common base of the diesel engine occupying large proportion will be weakened or canceled, thereby increasing design difficulty in vibration damping and noise reduction of the propulsion power module.

Further, at present, specific to various marine functions and needs of use, it is required to clarify cost-benefit ratio of vibration damping and noise reduction of different levels to economical efficiency, spatial size, and weight of the propulsion power module. Accordingly, the marine overall design could be provided with a standardized and serialized diesel engine propulsion power module, so as to achieve a rapid and precise design goal of the marine diesel engine propulsion power module.

Therefore, it is essential to provide a vibration damping and noise reduction device for a marine diesel engine propulsion power module and a marine diesel engine propulsion power module system with the vibration damping and noise reduction device, thereby solving the abovementioned deficiencies in prior art.

### SUMMARY

A series of simplified concepts is introduced into the portion of Summary, which would be further illustrated in the portion of the detailed description. The Summary of the present invention does not mean attempting to define the key feature and essential technical feature of the claimed technical solution, let alone determining the protection scope thereof.

To solve at least one of the deficiencies in the prior art, the present invention discloses a vibration damping and noise reduction device for a marine diesel engine propulsion power module, the power module comprising: a diesel engine and a gear box connected to the diesel engine via a transmission connector; wherein, the vibration damping and noise reduction device can meet the requirement of a four-level classification system of vibration damping and noise reduction of the propulsion power module, and wherein the vibration damping and noise reduction device comprises: a first vibration damping and noise reduction structure located on a diesel engine side comprising: a first vibration damping element connected to the diesel engine from below; a first valve body connected to the first vibration damping element from below; a second vibration damping element connected to the first valve body from below; a first mounting base fixedly connected to ground, wherein the second vibration damping element is mounted to the first mounting base. A second vibration damping and noise reduction structure located on a gear box side comprises: a third vibration damping element connected to the gear box from below; a second valve body connected to the third vibration damping element from below; a fourth vibration damping element connected to the second valve body from below; a second mounting base fixedly connected to ground, wherein the fourth vibration damping element is mounted to the second mounting base.

The marine diesel engine propulsion power module according to the present invention has, as compared with prior art, the capability of developing multiple experiments of the marine diesel engine propulsion power module, including performing experimental study and verification of the diesel engine, a transmission device, a control policy, and vibration damping and noise reduction in the marine diesel engine propulsion power module. It can improve universality, convertibility, mounting convenience, reliability in real ship application of the marine diesel engine propulsion power module of the same series or power level.

Preferably, wherein the first vibration damping element in the first vibration damping and noise reduction structure is a vibration isolator. The first valve body is a pure steel valve body. The second vibration damping element is a rigid cushion block. The third vibration damping element of the second vibration damping and noise reduction structure is a hard elastic vibration isolator. The second valve body is a pure steel valve body, and the fourth vibration damping element is a rigid cushion block.

Preferably, wherein the first vibration damping element in the first vibration damping and noise reduction structure is a vibration isolator. The first valve body is a pure steel valve body. The second vibration damping element is a vibration isolator. The third vibration damping element of the second vibration damping and noise reduction structure is a hard elastic vibration isolator. The second valve body is a pure steel valve body, and the fourth vibration damping element is a rigid cushion block.

Preferably, wherein the first vibration damping element in the first vibration damping and noise reduction structure is a vibration isolator. The first valve body is a valve body poured from high polymer material. The second vibration damping element is a vibration isolator. The third vibration damping element of the second vibration damping and noise reduction structure is a hard elastic vibration isolator. The second valve body is a valve body formed by locally strengthening the high polymer material, and the fourth vibration damping element is a vibration isolator.

Preferably, wherein the first vibration damping element in the first vibration damping and noise reduction structure is a vibration isolator. The first valve body is a valve body poured from high polymer material. The second vibration damping element is a vibration isolator, and further comprises an acoustic shield. The acoustic shield and the first valve body constitute a box body for arranging the diesel engine and the first vibration damping and noise reduction structure therein. The third vibration damping element of the second vibration damping and noise reduction structure is a hard elastic vibration isolator. The second valve body is a valve body formed by locally strengthening the high polymer material, and the fourth vibration damping element is a vibration isolator.

Preferably, the diesel engine is a marine high speed diesel engine or a marine medium speed diesel engine.

The present invention further discloses a marine diesel engine propulsion power module system. The marine diesel engine propulsion power module system comprises a power module. The power module comprises: a diesel engine and a gear box connected to the diesel engine via a transmission connector. The vibration damping and noise reduction device is any one of the vibration damping and noise reduction device.

Preferably, the diesel engine is a marine high speed diesel engine or a marine medium speed diesel engine.

### BRIEF DESCRIPTION OF THE DRAWINGS

The following drawings are hereby incorporated as part of the present invention for the understanding of the present invention. The drawings illustrate embodiments and description for explaining the principle of the present invention. In the drawings:
Fig. 1 is a lateral view of the first embodiment of the vibration damping and noise reduction device according to the present invention;
Fig. 2 a lateral view of the second embodiment of the vibration damping and noise reduction device according to the present invention;
Fig. 3 is a lateral view of the third embodiment of the vibration damping and noise reduction device according to the present invention; and
Fig. 4 is a lateral view of the fourth embodiment of the vibration damping and noise reduction device according to the present invention.

### Explanations for reference signs

1. Diesel engine. 2. Gear box.
3. Acoustic shield. 4. Intake muffler.
1.1,2.1,3.1,4.1, a first vibration damping element.
1.2, 2.2, 3.2, 4.2, a first valve body.
1.3, 2.3, 3.3, 4.3, a second vibration damping element.
1.4, 2.4, 3.4, 4.4, a first mounting base.
1.5, 2.5, 3.5, 4.5, a third vibration damping element.
1.6, 2.6, 3.6, 4.6, a second valve body.
1.7, 2.7, 3.7, 4.7 a fourth vibration damping element.
1.8, 2.8, 3.8, 4.8, a second mounting base.

### DETAILED DESCRIPTION

In the following description, numerous specific details are set forth in order to provide a more thorough understanding of the present invention. However, it is obvious to the skilled in this art that the present invention may be implemented without one or more of these details. Some technical features well-known in this art are not described in other examples so as not to confuse with the present invention.

In order to understand the embodiments of the present invention thoroughly, a detailed structure is provided in the following description. It would be apparent that the implementation of the embodiments of the present invention is not limited to the specific details that are familiar to those skilled in the art. Better embodiments of the present invention are illustrated in detail as below. However, the present invention may further have other embodiments in addition to these detailed description.

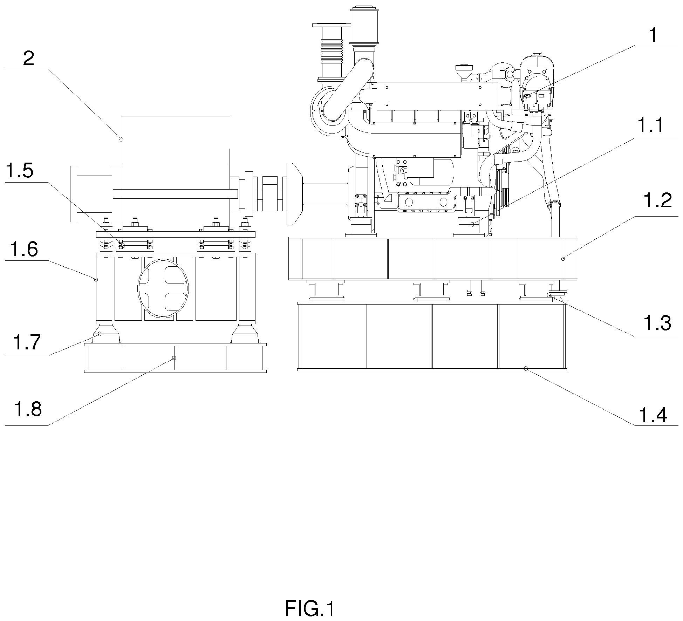

According to one aspect of the present invention, a marine diesel engine propulsion power module is provided. As shown in Figs. 1-4, the marine diesel engine propulsion power module comprises the following parts:

First, there is a diesel engine 1. The diesel engine 1 is connected to a gear box 2 via a transmission connector, thereby realizing power output by means of the gear box 2. Preferably, the diesel engine 1 is a four-stroke marine high speed diesel engine. Certainly, a four-stroke marine medium speed diesel engine can also be applied to the present invention. Preferably, a high-elastic coupling and a clutch are connected in series between the diesel engine 1 and the gear box 2 respectively. In order to ensure that the gear box 2 enables to be connected to an external loading, an output terminal of the gear box 2 is optionally connected to a power consumption device via the high-elastic coupling.

Specific to various marine functions and needs of use, the marine diesel engine propulsion power module may be classified in vibration damping and noise reduction. The classification system of vibration damping and noise reduction of the marine diesel engine propulsion power module primarily comprises vibration classification and noise classification, wherein the vibration is divided into four levels. Specifically, the four-level classification system of vibration damping and noise reduction in the present invention comprises:

The first level: To meet the application requirement of a common ship for general condition of vibration damping and noise reduction, a method of single layer vibration isolation may for example be used to reduce structural noise of the diesel engine propulsion power module to achieve vibration level difference of 15-25dB.

The second level: To meet the application requirement of a region with demanding vibration damping and noise reduction, a method of single layer vibration isolation plus damping process or double-layer vibration isolation may for example be used to reduce structural noise of the diesel engine propulsion power module to achieve the vibration level difference of 25-35 dB.

The third level: To meet the application requirement of the region with relatively highly demanding vibration damping and noise reduction, a method of double-layer vibration isolation may be used to reduce structural noise of the diesel engine propulsion power module to achieve the vibration level difference of 35-45 dB.

The fourth level: To meet the application requirement of the region with highly demanding vibration damping and noise reduction, a method of double-layer vibration isolation plus damping process may for example be used to reduce structural noise of the diesel engine propulsion power module, along with sound insulation design, to achieve the vibration level difference of being greater than 45 dB, and a sound insulation index of 20-30 dB(A).

Accordingly, in order to reduce vibration noise during operation of the marine diesel engine propulsion power module, it is required to dispose a vibration damping and noise reduction device for the marine diesel engine propulsion power module according to the present invention, wherein, the vibration damping and noise reduction device can meet the requirement of a four-level classification system of vibration damping and noise reduction of the propulsion power module. In the present invention, the diesel engine 1 is arranged in a manner of vibration isolation, and meanwhile the gear box 2 is arranged in the manner of hard elastic vibration isolation. As a preferable embodiment, four examples are illustrated in Figs. 1-4 according to the present invention.

### The first example

Fig. 1 illustrates the first example according to the prevent invention. Wherein the power module comprises: a diesel engine 1 and a gear box 2 connected to the diesel engine 1 via a transmission connector. The following is the detailed description in conjunction with Fig. 1.

As shown in Fig. 1, the vibration damping and noise reduction device of the power module comprises: a first vibration damping and noise reduction structure located on a diesel engine 1 side. The structure comprises:

A first vibration damping element 1.1: The first vibration damping element 1.1 is connected to the diesel engine 1 from below. Specifically, arrange preferably four the first vibration damping elements 1.1 on four footings below the diesel engine 1 to support the diesel engine 1 with its periphery, thereby reducing and eliminating vibratory force transmitted from the device to a base. In the first example, the first vibration damping element 1.1 is an upper layer vibration isolator. Preferably, the upper layer vibration isolator is a rubber vibration isolator and takes a form of Y shape or a cone, and has compressing and cutting composite load mode and favorable capability of shock resistance. The diesel engine 1 is arranged on the first valve body 1.2 via a plurality of the upper layer vibration isolators.

A first valve body 1.2: The first valve body 1.2 is connected to the first vibration damping element 1.1 from below. Specifically, in the first example, the first valve body 1.2 is a pure steel valve body.

A second vibration damping element 1.3: The second vibration damping element 1.3 is connected to the first valve body 1.2 from below. Specifically, preferred six rigid cushion blocks as the second vibration damping element 1.3 are mounted below the first valve body 1.2.

A first mounting base 1.4: The first mounting base 1.4 is fixedly connected to ground and the second vibration damping element 1.3 is mounted to the first mounting base 1.4, thereby forming a single layer vibration isolation structure for vibration isolation of the diesel engine 1.

A second vibration damping and noise reduction structure is located on a gear box 2 side, the structure comprising:

A third vibration damping element 1.5: The third vibration damping element 1.5 is connected to the gear box 2 from below. Specifically, preferred twelve hard elastic vibration isolators as the third vibration damping element 1.5 are connected to the underneath of the gear box 2. The gear box 2 is arranged on the second valve body 1.6 via a plurality of hard elastic vibration isolators.

A second valve body 1.6: The second valve body 1.6 is connected to the third vibration damping element from below, wherein the second valve body 1.6 is a pure steel valve body.

A fourth vibration damping element 1.7: The fourth vibration damping element 1.7 is connected to the second valve body 1.6 from below. Specifically, the fourth vibration damping element 1.7 is six rigid cushion blocks to dispose the second valve body 1.6 to the second mounting base.

A second mounting base 1.8: The second mounting base 1.8 is fixedly connected to the ground. The fourth vibration damping element 1.7 is mounted to the second mounting base 1.8, thereby forming a single layer vibration isolation structure for the gear box 2.

After test, the vibration level difference of the first example is 15-25dB.

### The second example

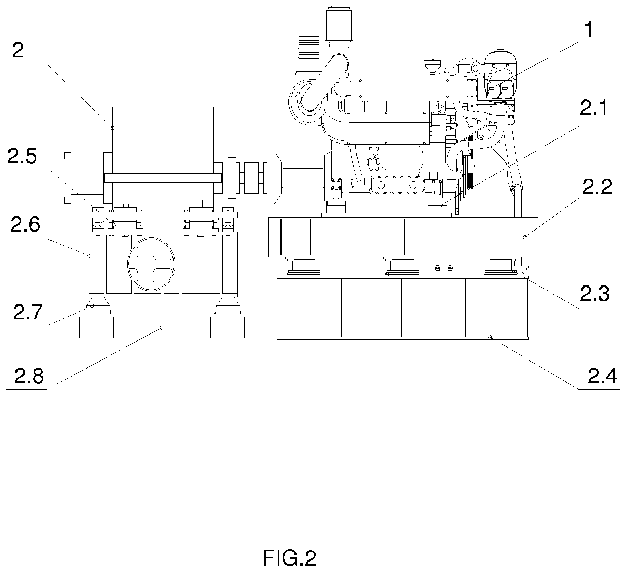

Fig. 2 illustrates a second example according to the present invention, wherein the power module is the same as that of the first example, which will not be repeated here. The following is the detailed description in conjunction with Fig. 2.

As shown in Fig. 2, the vibration damping and noise reduction device of the power module comprises a first vibration damping and noise reduction structure located on the diesel engine 1 side. The structure comprises:

A first vibration damping element 2.1: The first vibration damping element 2.1 is connected to the diesel engine 1 from below. Specifically, arrange preferably four the first vibration damping elements 2.1 on four footings below the diesel engine 1 to support the diesel engine 1 with its periphery, thereby reducing and eliminating vibratory force transmitted from the device to a base. In the second example, the first vibration damping element 2.1 is an upper layer vibration isolator. Preferably, the upper layer vibration isolator is a rubber vibration isolator and takes a form of Y shape or a cone, and has compressing and cutting composite load mode and favorable capability of shock resistance. The diesel engine 1 is arranged on the first valve body 2.2 via a plurality of the upper layer vibration isolators.

A first valve body 2.2: The first valve body 2.2 is connected to the first vibration damping element 2.1 from below. Specifically, in the second example, the first valve body 2.2 is a pure steel valve body.

A second vibration damping element 2.3: The second vibration damping element 2.3 is connected to the first valve body 2.2 from below. Specifically, preferred six lower layer vibration isolators as the second vibration damping element 2.3 are mounted below the first valve body 2.2.

A first mounting base 2.4: The first mounting base 2.4 is fixedly connected to ground and the second vibration damping element 2.3 is mounted to the first mounting base 2.4, thereby forming a double-layer vibration isolation structure for vibration isolation of the diesel engine 1.

A second vibration damping and noise reduction structure is located on a gear box 2 side, the structure comprising:

A third vibration damping element 2.5: The third vibration damping element 2.5 is connected to the gear box 2 from below. Specifically, preferred twelve hard elastic vibration isolators as the third vibration damping element 2.5 are connected to the underneath of the gear box 2. The gear box 2 is arranged on the second valve body 2.6 via a plurality of hard elastic vibration isolators.

A second valve body 2.6: The second valve body 2.6 is connected to the third vibration damping element 2.5 from below, wherein the second valve body 2.6 is a pure steel valve body.

A fourth vibration damping element 2.7: The fourth vibration damping element 2.7 is connected to the second valve body 2.6 from below. Specifically, the fourth vibration damping element 2.7 is six rigid cushion blocks to dispose the second valve body 2.6 to the second mounting base.

A second mounting base 2.8: The second mounting base 2.8 is fixedly connected to the ground. The fourth vibration damping element 2.7 is mounted to the second mounting base 2.8, thereby forming a double-layer vibration isolation structure for vibration isolation of the gear box 2.

After test, the vibration level difference of the second example is 25-35dB.

### The third example

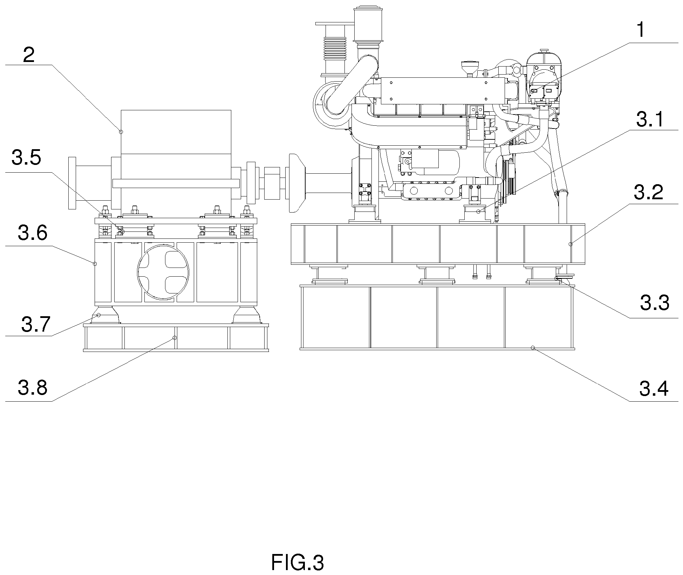

Fig. 3 illustrates a third example according to the present invention, wherein the power module is the same as that of the first example, which will not be repeated here. The following is the detailed description in conjunction with Fig. 3.

As shown in Fig. 3, the vibration damping and noise reduction device of the power module comprises a first vibration damping and noise reduction structure located on the diesel engine 1 side. The structure comprises:

A first vibration damping element 3.1: The first vibration damping element 3.1 is connected to the diesel engine 1 from below. Specifically, arrange preferably four the first vibration damping elements 3.1 on four footings below the diesel engine 1 to support the diesel engine 1 with its periphery, thereby reducing and eliminating vibratory force transmitted from the device to a base. In the third example, the first vibration damping element 3.1 is an upper layer vibration isolator. Preferably, the upper layer vibration isolator is a rubber vibration isolator and takes a form of Y shape or a cone, and has compressing and cutting composite load mode and favorable capability of shock resistance. The diesel engine 1 is arranged on the first valve body 3.2 via a plurality of the upper layer vibration isolators.

A first valve body 3.2: The first valve body 3.2 is connected to the first vibration damping element 3.1 from below. Specifically, the first valve body 3.2 is preferably a big valve body formed by connecting two beams. In the third example, the first valve body 3.2 is a valve body poured from high polymer material.

A second vibration damping element 3.3: The second vibration damping element 3.3 is connected to the first valve body 3.2 from below. Specifically, preferred six lower layer vibration isolators as the second vibration damping element 3.3 are mounted below the first valve body 3.2.

A first mounting base 3.4: The first mounting base 3.4 is fixedly connected to ground, and the second vibration damping element 3.3 is mounted to the first mounting base 3.4, thereby forming a double-layer vibration isolation structure for vibration isolation of the diesel engine 1.

A second vibration damping and noise reduction structure is located on a gear box 2 side, the structure comprising:

A third vibration damping element 3.5: The third vibration damping element 3.5 is connected to the gear box 2 from below. Specifically, preferred twelve hard elastic vibration isolators as the third vibration damping element 3.5 are connected to the underneath of the gear box 2. The gear box 2 is arranged on the second valve body 3.6 via a plurality of hard elastic vibration isolators.

A second valve body 3.6: The second valve body 3.6 is connected to the third vibration damping element 3.5 from below, wherein the second valve body 3.6 is preferably a big valve body formed by connecting two beams, which is the same as the first valve body 3.2, and wherein the second valve body 3.6 is a valve body formed by locally strengthening high polymer material.

A fourth vibration damping element 3.7: The fourth vibration damping element 3.7 is connected to the second valve body 3.6 from below. Specifically, the fourth vibration damping element 3.7 is six lower vibration isolators to dispose the second valve body 3.6 to the second mounting base.

A second mounting base 3.8: The second mounting base 3.8 is fixedly connected to the ground. The fourth vibration damping element 3.7 is mounted to the second mounting base 3.8, thereby forming a double-layer vibration isolation structure for vibration isolation of the gear box 2.

After test, the vibration reduction index of the third example is the vibration level difference of 35-45dB.

### The fourth example

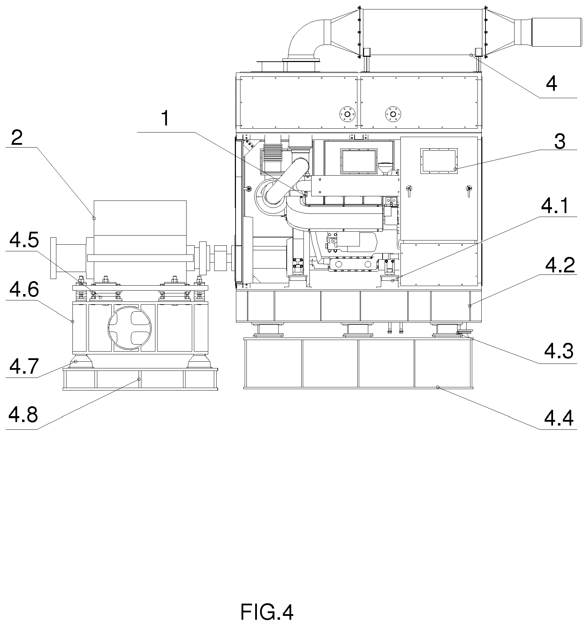

Fig. 4 illustrates a fourth example according to the present invention, wherein the vibration damping and noise reduction device further comprises an acoustic shield 3. The acoustic shield 3 and the first valve body 4.2 of the vibration damping and noise reduction device preferably constitute a box body for simultaneously arranging the diesel engine 1 and the first vibration damping and noise reduction structure therein. In order to ensure normal noise elimination for exhaust of the diesel engine 1, an exhaust-gas muffler may be retrofitted inside or outside the box body, or a silence pit for a test site may also be used. In order to silence air inflow of the diesel engine 1, an intake muffler 4 is mounted inside or upside the box body to silence the air inflow upon operation of the diesel engine. The following is the detailed description in conjunction with Fig. 4

As shown in Fig. 4, the vibration damping and noise reduction device of the power module comprises a first vibration damping and noise reduction structure located on the diesel engine 1 side. The structure comprises:

A first vibration damping element 4.1: The first vibration damping element 4.1 is connected to the diesel engine 1 from below. Specifically, arrange preferably four the first vibration damping elements 4.1 on four footings below the diesel engine 1 to support the diesel engine 1 with its periphery, thereby reducing and eliminating vibratory force transmitted from the device to a base. In the fourth example, the first vibration damping element 4.1 is an upper layer vibration isolator. Preferably, the upper layer vibration isolator is a rubber vibration isolator and takes a form of Y shape or a cone, and has compressing and cutting composite load mode and favorable capability of shock resistance. The diesel engine 1 is arranged on the first valve body 4.2 via a plurality of the upper layer vibration isolators.

A first valve body 4.2: The first valve body 4.2 is connected to the first vibration damping element 4.1 from below. Specifically, the first valve body 4.2 is preferably a big valve body formed by connecting two beams. In the fourth example, the first valve body 4.2 is a valve body poured from high polymer material. Meanwhile, the first valve body 4.2 constitutes the box body together with the acoustic shield 3.

A second vibration damping element 4.3: The second vibration damping element 4.3 is connected to the first valve body 4.2 from below. Specifically, preferred six lower layer vibration isolators as the second vibration damping element 4.3 are mounted below the first valve body 4.2.

A first mounting base 4.4: The first mounting base 4.4 is fixedly connected to ground, and the second vibration damping element 4.3 is mounted to the first mounting base 4.4, thereby forming the vibration damping and noise reduction structure of the box body for use in the diesel engine 1.

A second vibration damping and noise reduction structure is located on a gear box 2 side, the structure comprising:

A third vibration damping element 4.5: The third vibration damping element 4.5 is connected to the gear box 2 from below. Specifically, preferred twelve hard elastic vibration isolators as the third vibration damping element 4.5 are connected to the underneath of the gear box 2. The gear box 2 is arranged on the second valve body 4.6 via a plurality of hard elastic vibration isolators.

A second valve body 4.6: The second valve body 4.6 is connected to the third vibration damping element 4.5 from below, wherein the second valve body 4.6 is preferably a big valve body formed by connecting two beams, which is the same as the first valve body 4.2, and wherein the second valve body 4.6 is a valve body formed by locally strengthening high polymer material.

A fourth vibration damping element 4.7: The fourth vibration damping element 4.7 is connected to the second valve body 4.6 from below. Specifically, the fourth vibration damping element 4.7 is six lower vibration isolators to dispose the second valve body 4.6 to the second mounting base.

A second mounting base 4.8: The second mounting base 4.8 is fixedly connected to the ground. The fourth vibration damping element 4.7 is mounted to the second mounting base 4.8, thereby forming a double-layer vibration isolation structure for vibration isolation of the gear box 2.

After test, the vibration reduction index of the fourth example is the vibration level difference of being greater than 45dB, and the noise reduction index is noise reduction of 20-30 dB(A).

The vibration damping and noise reduction device for the marine diesel engine propulsion power module according to the present invention can provide the marine power design with a standardized and serialized diesel engine propulsion power module, so as to achieve a rapid and precise design goal of the marine diesel engine propulsion power module.

The present invention has been described by way of the above embodiments, but it is to be understood that the above-described embodiments are for illustrative and explanatory purposes only and are not intended to limit the invention to the scope of the described embodiments. It will be understood by those skilled in the art that the present invention is not limited to the above embodiments, and various modifications and variations can be made in accordance with the teachings of the present invention, which falls into the protection scope of the invention as claimed.

## Claims

1. A vibration damping and noise reduction device for a marine diesel engine propulsion power module, the power module comprising: a diesel engine and a gear box connected to the diesel engine via a transmission connector; wherein the vibration damping and noise reduction device can meet the requirement of a four-level classification system of vibration damping and noise reduction of the marine diesel engine propulsion power module, **characterized in**: the vibration damping and noise reduction device comprising:
a first vibration damping and noise reduction structure located on a diesel engine side, comprising:
a first vibration damping element connected to the diesel engine from below;
a first valve body connected to the first vibration damping element from below;
a second vibration damping element connected to the first valve body from below;
a first mounting base fixedly connected to ground, wherein the second vibration damping element is mounted to the first mounting base;
a second vibration damping and noise reduction structure located on a gear box side, comprising:
a third vibration damping element connected to the gear box from below;
a second valve body connected to the third vibration damping element from below;
a fourth vibration damping element connected to the second valve body from below;
a second mounting base fixedly connected to the ground, wherein the fourth vibration damping element is mounted to the second mounting base.

2. The vibration damping and noise reduction device of claim 1, **characterized in**: the first vibration damping element of the first vibration damping and noise reduction structure being a vibration isolator; the first valve body being a pure steel valve body, the second vibration damping element being a rigid cushion block; the third vibration damping element of the second vibration damping and noise reduction structure being a hard elastic vibration isolator, the second valve body being a pure steel valve body, and the fourth vibration damping element being a rigid cushion block.

3. The vibration damping and noise reduction device of claim 1, **characterized in**: the first vibration damping element of the first vibration damping and noise reduction structure being a vibration isolator, the first valve body being a pure steel valve body, the second vibration damping element being a vibration isolator; the third vibration damping element of the second vibration damping and noise reduction structure being a hard elastic vibration isolator, the second valve body being a pure steel valve body, and the fourth vibration damping element being a rigid cushion block.

4. The vibration damping and noise reduction device of claim 1, **characterized in**: the first vibration damping element of the first vibration damping and noise reduction structure being a vibration isolator, the first valve body being a valve body poured from high polymer material, the second vibration damping element being a vibration isolator; the third vibration damping element of the second vibration damping and noise reduction structure being a hard elastic vibration isolator, the second valve body being a valve body formed by locally strengthening the high polymer material, and the fourth vibration damping element being a vibration isolator.

5. The vibration damping and noise reduction device of claim 1, **characterized in**: the first vibration damping element of the first vibration damping and noise reduction structure being a vibration isolator, the first valve body being a valve body poured from high polymer material, the second vibration damping element being a vibration isolator and further comprising an acoustic shield constituting a box body with the first valve body, the box body being configured to arrange the diesel engine and the first vibration damping and noise reduction structure therein; the third vibration damping element of the second vibration damping and noise reduction structure being a hard elastic vibration isolator, the second valve body being a valve body formed by locally strengthening the high polymer material, and the fourth vibration damping element being a vibration isolator.

6. The vibration damping and noise reduction device of claim 1, **characterized in that**: the diesel engine is a marine high speed diesel engine or a marine medium speed diesel engine.

7. A marine diesel engine propulsion power module system, **characterized in**: the marine diesel engine propulsion power module system comprising:
a power module comprising: a diesel engine and a gear box connected to the diesel engine via a transmission connector; and
a vibration damping and noise reduction device being the vibration damping and noise reduction device according to any one of claims 1-6.

8. The marine diesel engine propulsion power module system of claim 7, **characterized in that**: the diesel engine is a marine high speed diesel engine or a marine medium speed diesel engine.
